(19) Europäisches Patentamt

European Patent Office

Office européen des brevets

(11) **EP 1 123 194 B1**

(12) **FASCICULE DE BREVET EUROPEEN**

(45) Date de publication et mention
de la délivrance du brevet:
**02.01.2003 Bulletin 2003/01**

(21) Numéro de dépôt: **99949078.2**

(22) Date de dépôt: **20.10.1999**

(51) Int Cl.⁷: **B29C 70/38**, B29C 53/80

(86) Numéro de dépôt international:
**PCT/FR99/02547**

(87) Numéro de publication internationale:
**WO 00/024566 (04.05.2000 Gazette 2000/18)**

(54) **PROCEDE DE FABRICATION D'UN CORPS DE REVOLUTION CREUX, CORPS TEL QU'OBTENU PAR LEDIT PROCEDE, ET DISPOSITIF DE MISE EN OEUVRE DUDIT PROCEDE**

VERFAHREN ZUR HERSTELLUNG EINES HOHLEN ROTATIONSKÖRPERS, DURCH DAS VERFAHREN HERSTELLBARER KÖRPER, UND VORRICHTUNG ZUR DURCHFÜHRUNG DES VERFAHRENS

METHOD FOR MAKING A HOLLOW SOLID GENERATED BY ROTATION, SOLID AS OBTAINED BY SAID METHOD, AND DEVICE FOR CARRYING OUT SAID METHOD

(84) Etats contractants désignés:
**AT BE CH CY DE DK ES FI FR GB GR IE IT LI LU MC NL PT SE**
Etats d'extension désignés:
**RO**

(30) Priorité: **23.10.1998 FR 9813293**

(43) Date de publication de la demande:
**16.08.2001 Bulletin 2001/33**

(73) Titulaire: **Saint-Gobain Vetrotex France S.A.**
**73000 Chambéry (FR)**

(72) Inventeurs:
 • **DEBALME, Jean-Paul**
 **F-73000 Chambéry (FR)**
 • **VOIRON, Jacques**
 **F-73160 St Jean de Couz (FR)**
 • **CIVIDINO, Alexandre**
 **73000 Chambéry (FR)**

(74) Mandataire: **Muller, René et al**
**SAINT-GOBAIN RECHERCHE**
**39, quai Lucien Lefranc**
**93300 Aubervilliers (FR)**

(56) Documents cités:
| EP-A- 0 198 744 | EP-A- 0 265 915 |
| EP-A- 0 463 611 | EP-A- 0 569 928 |
| DE-A- 4 215 756 | US-A- 5 447 586 |

## EP 1 123 194 B1

**Description**

La présente invention est relative à procédé de fabrication d'un corps de révolution creux à base d'une matière organique thermoplastique, dans lequel sont noyés en étant enroulés hélicoïdalement autour de son axe, des fils de verre continus.

La présente invention concerne également un corps de révolution creux tel que défini dans le préambule de la revendication indépendante 4.

Un tel corps est connu par exemple du document DE-A-42 15 756. Enfin, la présente invention concerne aussi un dispositif de mise en oeuvre du procédé envisagé.

Bien qu'elle ne soit pas limitée à une telle application, l'invention sera plus particulièrement décrite en référence à la fabrication de tuyaux de tous types, notamment ceux destinés à véhiculer des fluides sous pression.

Une autre application intéressante est la fabrication de réservoirs destinés à contenir des fluides notamment sous pression.

Les matières plastiques ont déjà été largement utilisées pour ce type de fabrication, mais, pour résister aux pressions importantes rencontrées, la paroi des tuyaux fabriqués a nécessairement une épaisseur très importante. Cette épaisseur très importante confère aux tuyaux un poids considérable.

Afin de réduire le poids de tels tuyaux, il a déjà été proposé de les renforcer au moyen de fibres de renforcement disposées à leur surface. Une telle solution a été notamment envisagée par le brevet GB-A-2 077 880, qui décrit un tuyau composite constitué d'un mandrin extrudé en PVC ou en polypropylène immédiatement recouvert, dans le sens axial, de fils de verre continus imprégnés d'une résine thermoplastique, sur lesquels sont enroulés de manière hélicoïdale des fils de verre continus imprégnés d'une résine thermodure, ces derniers étant eux-mêmes recouverts d'une couche en résine thermoplastique.

Outre le fait que la fabrication de ces tuyaux en continu est d'une complexité considérable et coûteuse, la durée de vie de ces tuyaux est très courte. En effet, les différents matériaux précités qui les constituent se délaminent entre eux rapidement, ce qui diminue rapidement leur résistance à l'éclatement.

C'est pourquoi le brevet EP-A-0697553 a proposé un autre type de tuyau composite constitué d'un mandrin extrudé en matière plastique au sein duquel sont dispersées des fibres de renforcement courtes, parallèlement à son axe, et autour duquel des fibres de renforcement continues sont enroulées hélicoïdalement.

Il s'avère que très rapidement les fibres courtes se déchaussent du mandrin extrudé, ce qui crée des amorces de rupture à l'intérieur de celui-ci, amorces qui se propagent rapidement. Par voie de conséquence, la résistance à l'éclatement du tuyau est rapidement diminuée. Pour garantir une résistance à l'éclatement à long terme minimale, notamment en respectant les normes en vigueur, il est alors nécessaire de compenser les propagations rapides des ruptures en augmentant à nouveau l'épaisseur du mandrin extrudé, ce qui induit une augmentation du poids non négligeable du tuyau.

En outre, même si une résistance à l'éclatement à long terme minimale est garantie, des fibres courtes, une fois déchaussées, apparaissent à la surface intérieure du mandrin. Et lorsque le fluide destiné à être véhiculé par le tuyau est de l'eau, les critères alimentaires auxquels doit répondre le tuyau ne sont plus remplis, car les fibres courtes apparentes risquent de venir polluer ledit fluide.

Le but de la présente invention est alors de pallier les inconvénients précités, et notamment de permettre la fabrication d'un tuyau du type précité qui soit léger et qui présente une excellente résistance à l'éclatement à long terme.

Pour ce faire, l'invention a pour objet un procédé de fabrication d'un corps de révolution creux dont la paroi est à base d'une matière organique thermoplastique A dans laquelle sont noyés en étant enroulés hélicoïdalement autour de l'axe du corps, des fils de verre continus, selon lequel on réalise, en ligne, les étapes suivantes:

   a/ on enroule, de manière hélicoïdale un ruban à l'état chauffé autour d'un d'un tube en rotation dont au moins la face externe de la paroi est à base de la matière thermoplastique A, le ruban étant constitué de la même matière thermoplastique A et de filaments de verre continus noyés dans cette matière;
   b/ on chauffe à une température supérieure à la température de fusion de la matière A, une partie de la surface périphérique extérieure du tube revêtue du ruban, dans une zone située immédiatement en aval de la zone de contact entre le ruban et le tube ;
   c/ on applique une pression locale sur la partie de la surface périphérique extérieure du tube revêtue du ruban, dans une zone située immédiatement en aval de la zone de chauffe de l'étape c/.

Avantageusement, on applique simultanément à la pression locale un refroidissement.

Ce procédé permet ainsi d'obtenir une très bonne répartition des filaments de verre dans la matière thermoplastique qui ne pourrait être réalisé par l'enseignement de l'état de la technique constitué notamment par les demandes de brevets DE 42 15756, EP 0 265 915, EP 0 463 611 et EP 0 569 928.

Le document DE 42 15756 montre l'enroulement d'un fil, constitué de fibres de verre et de matière thermo-

2

plastique, autour d'un corps creux en matière thermoplastique. Cependant la consolidation du corps creux entouré du fil est différente et se fait par chauffage de l'ensemble dans une enceinte et par mise sous pression de l'intérieur du corps creux.

Les documents EP 0 265 915, EP 0 463 611 et EP 0 569 928 décrivent l'enroulement selon plusieurs couches d'un fil ou d'une bande composite, à base de fibres de verre et d'un matériau polymère, autour d'un mandrin, la consolidation des couches entre elles étant établie par une opération de chauffage et une opération de compression qui sont, quasi-immédiatement ou lors du dépôt du fil ou bande composite sur le mandrin, effectuées simultanément contrairement à l'invention où elles sont pratiquées avantageusement l'une après l'autre.

En outre, le procédé de l'invention est particulièrement avantageux à appliquer à de la matière thermoplastique du type polyoléfine, car bien que cette matière soit de viscosité élevée, donc difficile à mettre en oeuvre surtout en association avec des fibres comme le remarque la demande EP 569 928, le procédé réussit parfaitement à fusionner la matière thermoplastique du tube avec celle de la matière composite du ruban le recauvrant. Il faut d'autant plus souligner cette disposition que les matières du type polyoléfine sont avantageusement de faible prix de revient et sont compatibles sur le plan alimentaire.

De préférence, le ruban arrive pour l'étape a/ à l'état chauffé en ayant subi, dans une zone située à proximité du tube, une opération de chauffage en superficie à une température supérieure à la température de ramollissement de la matière A et inférieure à sa température de dégradation.

De préférence encore, préalablement à l'étape a/, on réalise, également en ligne, les étapes suivantes :

- on entraîne et on assemble des fils co-mêlés continus constitués de filaments de verre et de filaments de matière A intimement mélangés sous la forme d'au moins une nappe de fils parallèles ;
- on introduit ladite nappe dans une zone où elle est chauffée à une température comprise entre la température de fusion et la température de dégradation de la matière A ;
- on fait passer la nappe chauffée dans un dispositif d'imprégnation de manière à obtenir un ruban densifié et laminé de forme plus aplatie que celle du ruban conforme à l'étape a/ ;
- on introduit le ruban laminé dans une zone où il est chauffé à une température comprise entre la température de fusion et la température de dégradation de la matière A de manière à obtenir le ruban conforme à l'étape a/.

Selon cette variante du procédé, il est possible d'utiliser des enroulements de fils co-mêlés obtenus selon un procédé direct tel que celui décrit dans les brevets EP 0 367 661, WO 98/ 01751 ou EP 0 599 695, fils qui présentent l'avantage d'avoir un excellent indice de co-mêlage, notamment grâce à la stabilité du procédé. Dans le cadre de l'invention, il faut comprendre par « excellent indice de co-mêlage » un indice de co-mêlage dont la valeur moyenne est inférieure à 12. On précise que pour calculer la valeur moyenne de l'indice de co-mêlage, on procède de la manière suivante :

- on réalise un certain nombre de coupes transversales sur une longueur de fil co-mêlé donnée ;
- on effectue un maillage de chacune des coupes ;
- on mesure, pour chaque maille, à l'aide d'une méthode micrographique du type analyse d'image, la répartition surfacique entre les filaments de verre et les filaments de matière organique thermoplastique;
- on calcule, pour chaque coupe, l'écart type des répartitions surfaciques de toutes les mailles, qui est l'indice de co-mêlage de la coupe considérée ;
- on calcule la valeur moyenne de l'indice de co-mêlage pour toutes les coupes.

Cet excellent indice de co-mêlage induit une excellente répartition des fils de verre dans la matière thermoplastique parallèlement à l'axe du corps, avec les avantages qui en découlent tels que ceux mentionnés plus haut. L'invention vise également un corps de révolution creux destiné notamment à contenir un fluide sous pression, la paroi du corps comprenant selon son épaisseur :

- une première zone dont la périphérie interne est destinée à être en contact avec le fluide et dont au moins la périphérie externe est constituée par une matière organique thermoplastique A unique,
- et une deuxième zone constituée d'une matière thermoplastique identique à la matière A et de fils de verre continus noyés dans ladite matière thermoplastique et enroulés hélicoïdalement autour de l'axe longitudinal du corps de révolution creux,
  caractérisé en ce que,
- la deuxième zone comprend selon son épaisseur une première partie agencée dans la continuité de la première zone du corps et constituée par la matière thermoplastique A et les fils de verre, et une seconde partie formant la périphérie externe du corps et constituée par la seule matière thermoplastique A, et
- la paroi dudit corps présente un taux volumique de vide $V_v$ inférieur à 0,5 %, de préférence inférieur à 0,2 %.

On précise que, dans le cadre de l'invention, le taux volumique de vide conforme à l'invention peut être mesuré de manière connue à l'aide dune méthode micrographique du type analyse d'image. Il convient alors d'effectuer plusieurs mesures locales sur le corps creux et d'en réaliser un traitement statistique.

Il est aussi possible de calculer autrement le taux volumique de vide à partir d'une manière globale, à l'aide de la formule suivante :

$$V_v = (d_{th} - d_r)/d_{th}$$

dans laquelle $d_{th}$ et $d_r$ représentent respectivement la densité théorique et réelle du corps de révolution. La densité théorique est calculée à partir de la densité du verre et des différentes densités de la matière organique thermoplastique A pondérées par leurs pourcentages relatifs. La densité réelle est, quant à elle, calculée en faisant le rapport du volume réel du corps de révolution mesuré sur la masse du corps effectivement pesée.

La solution répond parfaitement au problème posé. Pour arriver à celle-ci, les inventeurs ont su tout d'abord analyser les fonctions primordiales auxquelles doit répondre un tuyau composite et mettre en évidence les lacunes présentées par les tuyaux composites selon l'art antérieur, tels que ceux mentionnés en préambule.

Selon cette analyse, les fibres de renfort doivent en principe reprendre l'intégralité des efforts circonférentiels et longitudinaux dus à la pression exercée par le fluide circulant à l'intérieur du tuyau et la zone interne en matière organique thermoplastique doit assurer l'étanchéité et la compatibilité chimique avec ce même fluide. Un simple frettage de fibres de renfort continues sur un mandrin fait en matière organique thermoplastique devrait donc assurer ces fonctions.

Or les inventeurs ont découvert que, pour assurer la durabilité d'un tuyau composite de ce type dans le temps, il était absolument nécessaire d'avoir à la fois une protection efficace des fibres et une parfaite adhérence entre les différents éléments le composant.

Ils ont ainsi pu concevoir un corps tel que revendiqué avec une union entre les différents éléments le composant suffisamment intime pour garantir une durée de vie bien supérieure à celles rencontrées auparavant.

En outre, l'invention permet d'obtenir des tuyaux dont le transport et la manutention sont largement facilités.

Selon une caractéristique avantageuse de l'invention, la matière organique thermoplastique A peut être une polyoléfine du type polyéthylène PE ou polypropylène PP, ou bien du chlorure de polyvinyle (PVC). Ces matières ont pour avantages, entre autres, d'être chimiquement inertes, de pouvoir résister à des températures très basses et de présenter un faible coût de revient.

La densité d de la matière organique thermoplastique A peut être variable dans l'épaisséur de la paroi et peut notamment être comprise entre 0,915 et 0,960 g/cm$^3$.

Selon une variante avantageuse, les fils de verre continus noyés dans la matière organique thermoplastique forment un angle compris entre 50 et 55° avec l'axe dudit corps. Un tel agencement permet d'augmenter encore la résistance axiale et circonférentielle du corps à la pression exercée par un fluide circulant ou contenu à l'intérieur pour une même quantité de fils de verre continus utilisée.

Selon une autre variante avantageuse, les fils de verre continus noyés dans la matière organique thermoplastique forment un angle proche de 90° avec l'axe du corps et d'autres fils de verre continus sont noyés dans la matière organique thermoplastique en étant disposés longitudinalement le long de l'axe du corps.

Le choix d'une de ces variantes, de leur combinaison ou d'une autre variante privilégiant un angle d'enroulement des fils de verre continus différent, ainsi que des quantités respectives des fils de verre dans la direction selon laquelle ils sont disposés sera à effectuer en fonction des contraintes spécifiques liées à chaque application telles que la résistance à la pression, à l'ovalisation, à la flexion, à la traction...

De préférence, les fils de verre continus sont répartis uniformément dans la première partie de la deuxième zone de la paroi du corps creux. Une telle répartition des fils dans la matière organique thermoplastique augmente très favorablement les propriétés mécaniques du corps et les garantit à long terme.

L'invention concerne également un tuyau composite constitué du corps de révolution précédemment défini, revêtu d'une couche externe de finition et de protection en matière organique thermoplastique, de préférence identique à la matière A.

La couche de finition conforme à l'invention permet de protéger de manière sûre le tuyau contre les agressions extérieures susceptibles d'intervenir lors du stockage, du transport, des opérations de chantier et de son utilisation.

Le corps ou le tuyau conformes à l'invention sont particulièrement adaptés pour contenir et/ou véhiculer des fluides sous pression.

L'invention vise enfin un dispositif de mise en oeuvre du procédé défini ci-dessus, comprenant:

- des moyens pour chauffer au moins en superficie un ruban constitué de fils de verre continus noyés dans une matière organique thermoplastique A, dans une zone située à proximité d'un tube dont au moins la face externe de la paroi est à base de la même matière A, en rotation autour de son axe ;

- des moyens pour enrouler, de manière hélicoïdale, le ruban chauffé autour du tube en rotation ;
- des moyens pour chauffer à une température supérieure à la température de fusion de la matière A, une partie de la surface périphérique extérieure du tube revêtue du ruban, dans une zone située immédiatement en aval de la zone de contact entre le ruban et le tube ;
- des moyens pour appliquer une pression locale sur la partie de la surface périphérique extérieure du tube revêtue du ruban, dans une zone située immédiatement en aval de la zone de chauffe.

Selon une variante préférée, les moyens de chauffage superficiel du ruban comprennent au moins un four de type à infrarouge, de préférence fonctionnant avec des rubans ou des lampes régulés en puissance en fonction de la température du ruban chauffé superficiellement. Un tel four a l'avantage d'être à la fois performant sur le plan énergétique et facile à réguler.

Avantageusement, les moyens d'enroulement comprennent une tête de pose qui facilite la mise en place du ruban chauffé conforme à l'invention. La tête de pose est mobile et commandée en rotation ; elle comprend de préférence trois galets de forme hyperboloïde, parallèles entre eux et dont l'axe longitudinal est sensiblement perpendiculaire à la direction de défilement du ruban qui est elle-même parallèle à l'axe de pivotement de la tête de pose. Une telle configuration pour la tête de pose améliore considérablement la précision et la reproductibilité de la mise en place du ruban sur le tube.

Selon une caractéristique additionnelle, les moyens de chauffage du tube revêtu du ruban comprennent une buse de soufflage d'air chaud de section approximativement oblongue.

Selon une autre caractéristique, les moyens pour appliquer la pression localisée comprennent au moins un galet rotatif mis en pression par un vérin. Lorsque l'ensemble des étapes selon l'invention est réalisé en continu à partir d'enroulements de fils co-mêlés continus obtenus notamment par un procédé direct, le dispositif peut comporter en outre :

- des moyens pour entraîner et assembler des fils co-mêlés continus constitués de filaments de verre et de filaments de matière A intimement mélangés sous la forme d'au moins une nappe de fils parallèles :
- des moyens pour chauffer ladite nappe à une température comprise entre la température de fusion et la température de dégradation de la matière A ;
- un dispositif d'imprégnation de la nappe chauffée de manière à obtenir un ruban densifié et laminé de forme aplatie ;
- des moyens pour maintenir le ruban à une température comprise entre la température de fusion et la température de dégradation de la matière A jusqu'aux moyens d'enroulement du ruban.

Selon cette variante, les moyens d'enroulement et d'assemblage comprennent un cantre à partir duquel sont déroulées des bobines de fils co-mêlés continus constitués de filaments de verre et de filaments de matière A intimement mélangés et au moins un galet assurant le guidage des fils co-mêlés.

D'autres détails et caractéristiques avantageuses ressortiront ci-après à la lecture de la description détaillée d'un exemple illustratif mais non limitatif de l'invention, fait en référence aux figures 1a à 3c qui représentent respectivement :

- figure 1a: une image d'une partie d'un corps creux conforme à l'invention;
- figures 1b et 1c : deux coupes micrographiques visualisant l'épaisseur de la paroi du corps creux selon la Figure1a;
- figures 2a à 2e : une représentation schématique générale du dispositif utilisé pour la fabrication du corps creux selon la figure 1a ainsi que celles de différentes parties de ce même dispositif ;
- figures 3a à 3c : des images de corps creux données à titre d'exemples comparatifs.

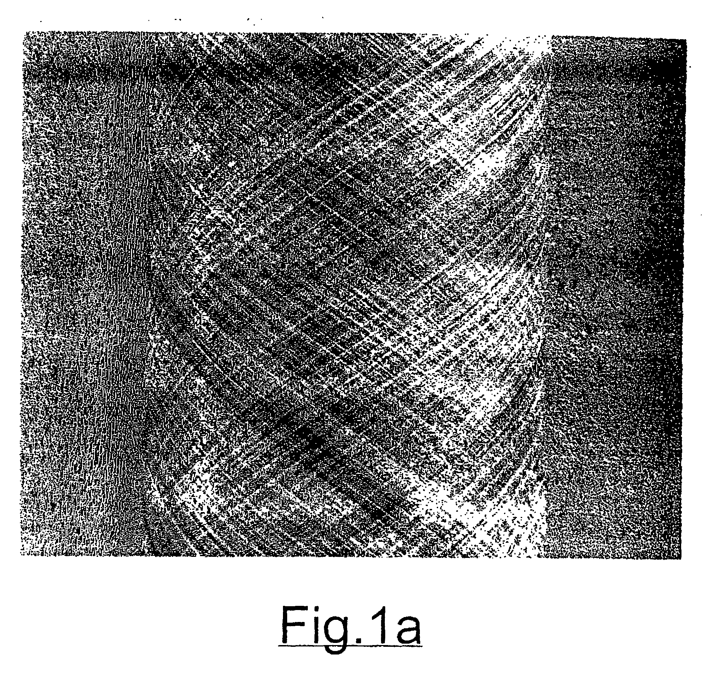

La figure 1a montre une image de la surface extérieure d'une partie d'un corps creux 1 constituée d'une matière thermoplastique organique A, par exemple du polyéthylène, renforcé de fils de verre continus conformément à l'invention, dont le diamètre extérieur est égal à 200 mm. Sur cette image on constate la parfaite homogénéité de cette partie du tuyau sur toute sa hauteur, avec en particulier un motif en forme de losange uniforme. Ce motif est caractéristique d'une des étapes du procédé de fabrication selon l'invention et révèle l'angle sous lequel les fils de verre continus ont été enroulés.

Le poids de cette partie du corps creux est égal à environ 4kg/m.

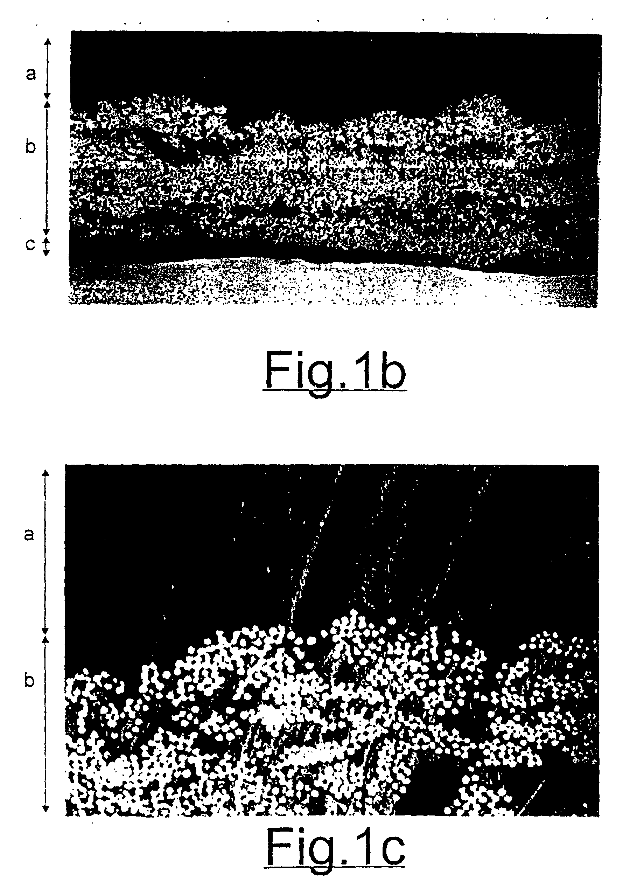

Les figures 1b et 1c, sont deux coupes micrographiques visualisant l'épaisseur de la paroi de cette partie du corps creux, obtenues à l'aide d'un microscope. Sur la figure1b, on voit la structure particulière de la partie du corps creux. Celle-ci se décompose dans l'épaisseur en:

- une première zone a interne dont la périphérie interne est destinée à être en contact avec le fluide circulant ou stocké dans le corps creux, cette zone comprenant du polyéthylène pur de densité moyenne environ égale à 0,955 g/cm$^3$, et dont le Melt Index (M.I) à la température de 190°C et sous un poids de 5 kg est égal à 0,45 ;

- une deuxième zone comprenant du polyéthylène de densité moyenne environ égale à 0,952 g/cm$^3$, et dont le Melt Index (M.I) à la température de 190°C et sous un poids de 2,16 kg est égal à 18, et des fils de verre continus uniformément répartis le long de l'axe et noyés dans l'épaisseur de cette zone.

La deuxième zone se décompose plus particulièrement dans son épaisseur, d'une part, en une partie b qui est agencée dans la continuité de la première zone a du corps creux et comprend du polyéthylène et les fils de verre, et d'autre part, en une partie c constituant la périphérie externe du corps creux et comprenant uniquement du polyéthylène.

En fait, à la vue de la figure 1c qui représente un grossissement (x8) localisé de la figure précédente, on s'aperçoit clairement qu'il n'y a pas de « frontière » visible entre la première zone a et la partie b de la deuxième zone. Cette absence de « frontière » révèle la parfaite continuité de la matière organique thermoplastique utilisée. Il y a donc eu, au cours du processus de fabrication du corps creux une parfaite union entre les deux variétés de polyéthylène de densité différente, comme expliqué ci-après.

Une méthode de mesure, telle que celle de l'analyse d'image décrite plus haut, permet de quantifier le taux volumique de vide de la paroi de cette partie du corps creux 1 : il est de l'ordre de 0,2 %.

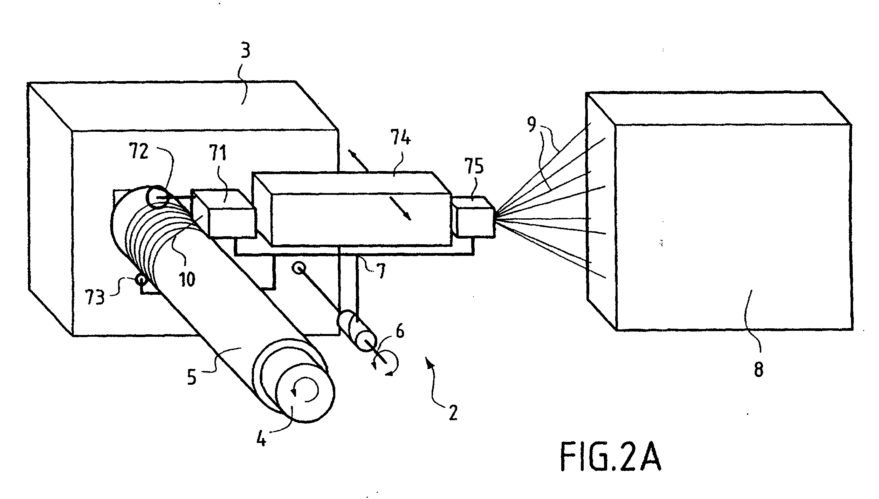

La figure 2a est une représentation schématique générale du dispositif qui a été utilisé pour la fabrication du corps creux selon la figure 1a. Ce dispositif 2 comprend tout d'abord un bâti 3 à l'intérieur duquel est fixé un moteur et son système de synchronisation des différents mouvements, non représentés.

De ce bâti 3 sort un mandrin 4 apte à être mis en rotation et dont la section a été expansée par gonflage de manière à ce que le tube extrudé 5 en polyéthylène PE 100, d'épaisseur égale à 5 mm, est emmanché sur lui avec un jeu serré. De ce bâti 3 sort également un arbre 6 dont la rotation assure le déplacement d'un ensemble chariot 7 en translation parallélement au mandrin 4.

Cet ensemble chariot 7 supporte respectivement une tête 71 de pose de la matière constitutive de la deuxième zone du corps creux formée par les parties b et c, un galet presseur 72 dont le réglage en hauteur est assuré par un vérin hydraulique non représenté, une buse de soufflage d'air chaud 73, une enceinte chauffante 74 et un dispositif de tension 75.

En amont de l'ensemble chariot 7 se trouve disposé un cantre 8 à partir duquel sont déroulées des bobines de fils co-mêlés continus 9 constitués de 800 filaments de verre et de 800 filaments de polyéthylène intimement mélangés. Ces fils co-mêlés 9 sont commercialisés sous la dénomination commerciale TWINTEX® par la société VETROTEX, le rapport en poids étant de préférence, en pourcentages, de 60 pour le verre et de 40 pour le polyéthylène. Un tel rapport permet d'obtenir le meilleur compromis pour la réalisation du corps creux, respectivement entre la facilité de mise en oeuvre et les performances mécaniques à la fois dans le sens longitudinal et transverse.

Le principe général de fonctionnement de ce dispositif 2 est le suivant :

les fils co-mêlés continus issus des bobines déroulées sont tout d'abord assemblés sous la forme d'une nappe de fils parallèles entre eux . Celle-ci passe à travers le dispositif de tension 75, qui la met sous tension, puis à l'intérieur de l'enceinte chauffante 74, qui sera détaillée par la suite. A la sortie de cette enceinte 74, la nappe a été transformée en un ruban 10 dont l'enveloppe extérieure en polyéthylène est encore ramollie et a une température comprise entre 150 et 185°C. Le ruban 10 défile ensuite au travers de la tête de pose 71 et ressort de celle-ci de manière à être appliqué convenablement sur le tube 5. La tête de pose est déplacée en translation parallèlement à l'axe longitudinal du tube tandis que ce dernier est entraîné en rotation de manière à enrouler autour de lui le ruban, et donc les fils de verre, de façon hélicoïdale selon un angle avantageux entre 50 et 55° par rapport à l'axe longitudinal mais qui pourrait aussi être proche de 90°. L'angle d'enroulement dépend de la vitesse de déplacement du chariot et de la vitesse de rotation du tube. Dans une zone située immédiatement en aval de la zone de contact entre le ruban 10 et le tube 5, une buse de soufflage d'air chaud 73 vient chauffer une partie de la surface périphérique extérieure du tube 5 revêtue du ruban 10 à une température comprise entre 200 et 240°C. Immédiatement en aval de cette zone de chauffe le galet presseur 72 applique une pression locale sur la partie de la surface périphérique extérieure du tube 5 revêtue du ruban 10 et chauffée, de manière à solidariser le ruban 10 avec le tube 5. L'ensemble des éléments étant monté sur le chariot mobile 7 se déplaçant parallèlement à l'axe longitudinal du tube 5, comme dit précédemment, ce dernier devient entièrement revêtu du ruban 10 par le déplacement en aller-retour du chariot 7. Ce déplacement est obtenu par le fonctionnement du système de synchronisation précité.

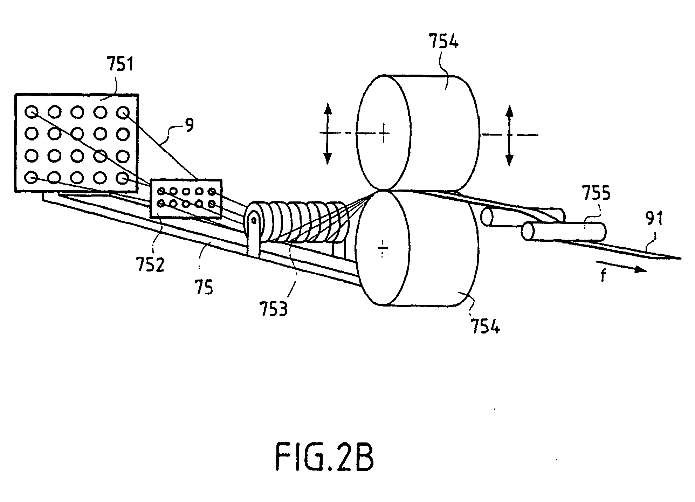

Les différentes parties du dispositif vont maintenant être décrites plus en détail, en référence aux figures 2b à 2e.

Le cantre 8 non représenté se compose essentiellement d'un châssis comprenant des axes tournants horizontaux supportant les bobines de fils co-mêlés conformes à l'invention, commercialisés sous la dénomination commerciale TWINTEX®. Ces axes tournants sont freinés par un dispositif approprié dont la fonction est de réguler la tension des fils co-mêlés et d'éviter que les bobines ne se déroulent de manière incontrôlée. Bien évidemment, le cantre 8 peut être fixe ou mobile suivant le déplacement du chariot 7. Cela dépendra notamment de la longueur du tube 5 à revêtir conformément à l'invention.

La figure 2b est une vue détaillée en perspective du dispositif de tension 75 utilisé conformément à l'invention. Il comporte respectivement, dans le sens indiqué par la flèche f qui donne le sens de défilement des fils co-mêlés 9, une première plaque à oeillets 751, une deuxième plaque perforée 752 parallèle à la première, un galet rainuré 753, deux roues en contact 754 et enfin un embarrage 755. La plaque à oeillets 751 regroupe les fils co-mêlés 9 et les guide sous un angle faible vers la plaque perforée 752. Celle-ci les regroupe par paire et les aligne avec le galet 753 dont les rainures maintiennent un espace régulier entre les fils 9 de manière à obtenir une nappe 91 homogène après être passés entre les deux roues 754 en contact. Une de ces deux roues 754 est munie d'un capteur de vitesse mesurant la vitesse de la nappe 91, le contact entre les roues étant tel que l'entraînement est assuré sans glissement de la nappe 91. L'embarrage 755, quant à lui, réduit le foisonnement des fils co-mêlés 9, ce qui évite tout risque de collage des fils en polyéthylène sur les parois portées à haute température du dispositif de chauffage 74.

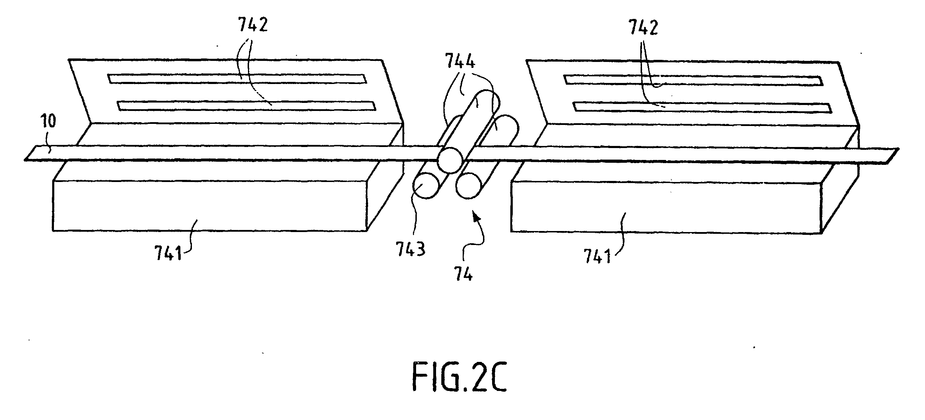

Comme il est représenté à la figure 2c, le dispositif de chauffage 74 comporte deux fours 741 alignés dont les sources de chaleur sont des lampes à infrarouge 742 régulées en puissance, et entre lesquels est situé un dispositif d'imprégnation 743 qui, en aplatissant la nappe 91, permet d'obtenir un ruban 10 en évacuant d'une part l'air contenu entre les fils pour densifier la matière, et d'autre part, en noyant totalement les filaments de verre dans la matière thermoplastique A. Cette étape dans le procédé de l'invention contribue de manière essentielle à la faible teneur en vide de la partie b du corps creux ensuite obtenu. La régulation des fours est telle que les températures atteintes par le ruban 10 en sortie du four 741 le plus en amont, c'est à dire le plus proche du dispositif de tension 75, sont comprises entre 170 et 180°C, tandis que celles atteintes en sortie du four le plus en aval, c'est à dire le plus proche de la tête de pose sont comprises entre 175 et 185°C. Le dispositif d'imprégnation 743 est constitué de trois cylindres 744 chauffants parallèles entre eux et disposés en triangle. Le cylindre supérieur est réglable en hauteur de manière que le ruban 10 soit plus ou moins aplati.

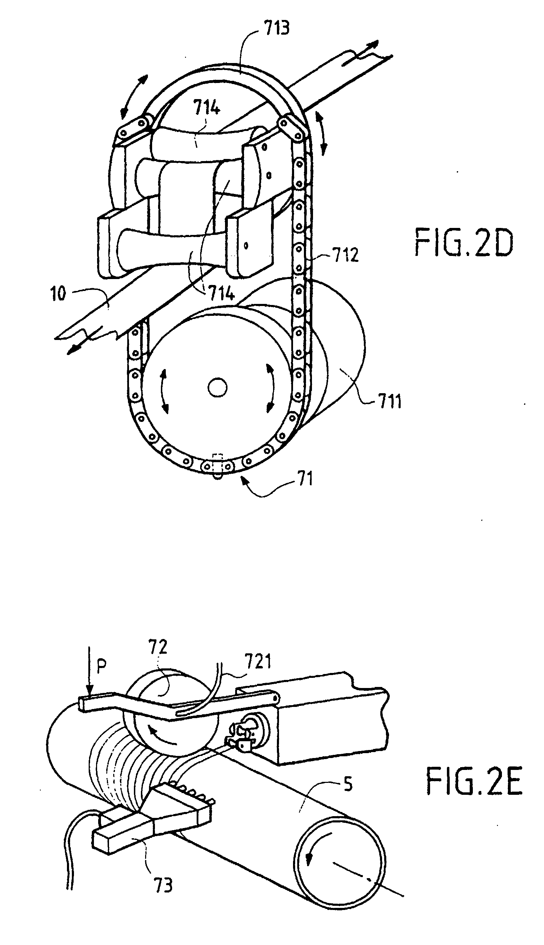

La figure 2d montre la structure détaillée de la tête de pose 71. Cette tête 71 comporte un vérin rotatif 711 à butées réglable dont la rotation entraîne, par l'intermédiaire d'une chaîne de renvoi 712, un roulement à billes 713 circulaire solidaire de trois galets 714 de forme hyperboloïde pouvant être mis en rotation sur eux-mêmes. La rotation du vérin rotatif 711 dont le rappel est assuré par deux ressorts non représentés permet de faire pivoter avantageusement la tête autour d'un axe parallèle et sensiblement confondu avec l'axe médian du ruban, dans un sens ou dans le sens opposé, pour qu'elle s'incline vers le sens de déplacement linéaire du chariot 7 de façon à éviter la déformation du ruban en cours d'enroulement, l'angle d'inclinaison donné à la tête étant adapté à l'angle désiré d'enroulement hélicoïdal du ruban. Les galets 714 sont tous chauffés et régulés en température de telle sorte que le ruban 10 soit maintenu à une température suffisamment élevée à sa sortie de la tête de pose 71. Cette structure avantageuse permet d'avoir de très bonnes précision et reproductibilité de la pose du ruban.

La figure 2e montre enfin l'agencement précis des différents éléments du dispositif salon l'invention dans sa partie aval. Selon cet agencement, la buse oblongue de soufflage d'air chaud 73 est disposée perpendiculairement au tube 5, en étant aligné avec la tête de pose 71 dans une position diamétralement opposée à celle-ci. Le galet presseur 72, dont la pression de contact représentée par la flèche P est exercée par l'intermédiaire d'un vérin hydraulique non illustré, est solidaire du chariot mobile et éloigné de la tête de pose d'une distance équivalente à environ la largeur du ruban 10. Ce galet est refroidi par un fluide arrivant dans un tuyau souple 721. Cet agencement des différents éléments à cet endroit de la fabrication permet d'obtenir, en fusionnant le polyéthylène du ruban 10 et celui du tube 5, une continuité parfaite du polyéthylène de la première zone du corps creux avec celui de la partie b de la deuxième zone, ainsi que de faire exsuder une fine pellicule de polyéthylène dans la partie périphérique extérieure et enfermer dans l'épaisseur du corps creux les fils de verre pour former la partie c. Cet agencement permet également de chasser l'air entre les plis du ruban. En particulier, il est important que la buse de chauffage 73 et le galet presseur 72 soient disposés en aval de la pose du ruban et ne soient donc pas mis en oeuvre au moment de la mise en contact du ruban sur le tube. En effet, la tête de pose faisant un aller-retour sur la longueur du tube et repassant donc dans la même zone de contact, si la buse de chauffage agissait au moment de la mise en place du ruban sur le tube, ce dernier finirait par être réchauffé ce qui augmenterait alors son diamètre, et les dernières couches du ruban seraient alors déposées sur une plus grande circonférence; en refroidissant le thermoplastique se rétractant, les filaments de verre ne seraient malheureusement plus tendus autour du tube.

On obtient la partie du corps creux représentée à la figure 1a après réglage optimisé des paramètres influençant les températures atteintes au cours du procédé, et donc le degré d'union recherché selon l'invention entre les filaments de verre et la matière thermoplastique et entre les variétés de matière thermoplastique de densités différentes du tube et respectivement du ruban, les paramètres étant la vitesse de rotation du mandrin 4, la translation effectuée par le chariot mobile 7 par rotation du mandrin, le débit et la température de l'air soufflée par la buse 73, la distance entre le tube 5 et la buse 73, la pression exercée par le vérin hydraulique sur le galet presseur 72.

Le tableau 1 ci-dessous regroupe à titre d'exemple, pour un corps creux selon l'invention de diamètre extérieur égal à 200mm, présentant un angle d'enroulement du ruban de 55° et avec une épaisseur des zones combinées b et c de 1,2 mm, le poids en kg/m, l'épaisseur totale de la paroi sans couche de finition en mm, la rigidité en kN/m$^2$ et la pression à l'éclatement en bar.

### TABLEAU 1

| | Exemple selon l'invention |
|---|---|
| Poids (kg/m) | 4,0 |
| Epaisseur totale (mm) | 6,2 |
| Rigidité (kN/m$^2$) | 12 |
| Pression à l'éclatement (bar) | > 70 |

Pour obtenir un produit fini du type tuyau servant à véhiculer des fluides, il est nécessaire que la paroi externe de ce tuyau soit garantie de toute agression extérieure, à cette fin il est prévu de revêtir d'une couche externe de finition et de protection le corps creux de l'invention en extrudant la couche par, de préférence, du polyéthylène.

Il est admis qu'après 50 ans, le polyéthylène pur garde moins de 50% de ses caractéristiques initiales. Par ailleurs, il a été démontré que les essais de vieillissement accéléré par une technique bien connue des fabricants de produits en polyéthylène s'appliquent au matériau de l'invention. On a ainsi mis en évidence qu'un tel tuyau conforme à l'invention conserve des performances mécaniques élevées au cours du temps gardant 60 à 80% de ses caractéristiques initiales.

Le tableau 2 ci-dessous donne une comparaison sur les contraintes à la rupture du matériau après 50 ans entre le tuyau selon l'invention et un tuyau en polyéthylène pur.

### TABLEAU 2

| | Contrainte à la rupture (MPa) | |
|---|---|---|
| | Valeur initiale | Après 50 ans |
| Tuyau selon l'invention | 800 | 500 à 600 |
| Tuyau en polyéthylène pur | 20 | 10 |

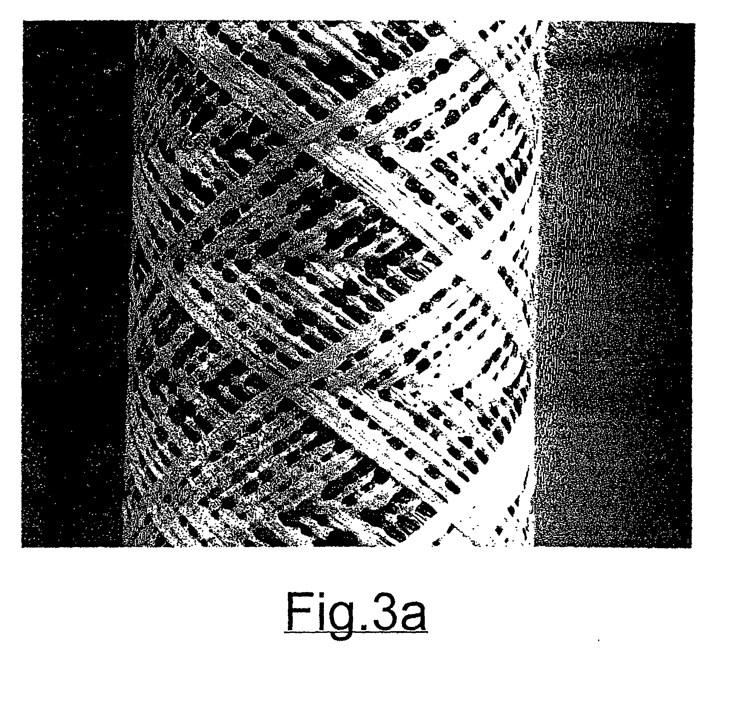

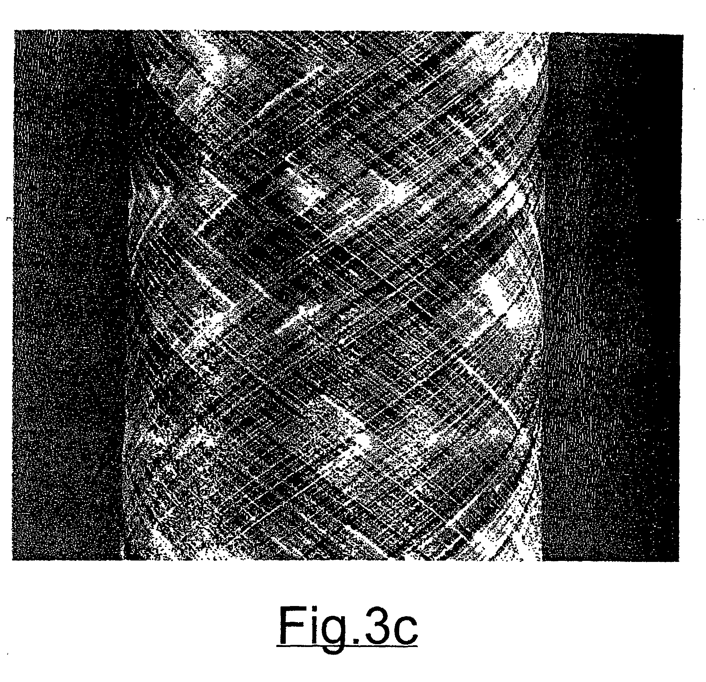

Enfin, les figures 3a à 3c représentent des images de parties du corps creux données à titre d'exemples comparatifs :

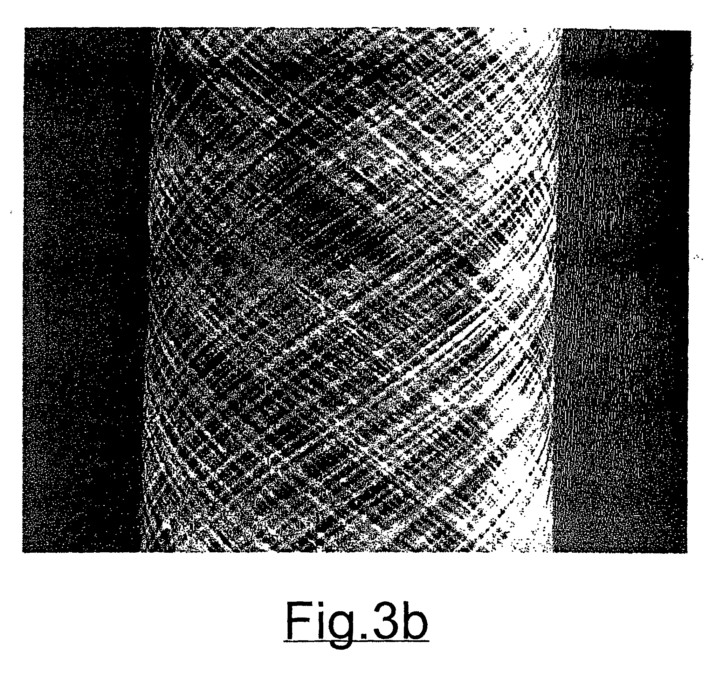

- la partie du corps creux de la figure 3a a été obtenue à l'aid du même dispositif de fabrication 2 que celui qui vient d'être décrit mais à partir de bobines uniquement de fils de verre continus ;
- la partie du corps creux de la figure 3b a été obtenue également à l'aide du même dispositif de fabrication 2 mais à partir de bobines de fils de verre continus et de polyéthylène co-enroulés mais sans aucun co-mêlage entre eux ;
- la partie du tuyau de la figure 3c a été obtenue enfin à l'aide du même dispositif de fabrication 2 à partir des mêmes bobines de fils co-mêlés utilisés selon l'invention, à savoir ceux commercialisés sous la dénomination commerciale TWINTEX®, mais sans préchauffage du ruban avant son dépôt sur le tube.

Après analyse de ces images, on constate qu'aucune de ces parties de corps creux ne présente l'homogénéité de la partie de tuyau selon l'invention, représentée à la figure 1a, cette homogénéité est caractérisée par la parfaite imprégnation du TWINTEX avec le polyéthylène du tube et que, plus précisément :

- l'utilisation de fils uniquement de verre ne permet pas leur imprégnation par le polyéthylène du tube 5 bien que celui-ci fonde superficiellement;
- l'utilisation d'un matériau à base de fils de verre et de polyéthylène co-enroulés sans co-mêlage conduit à une mauvaise imprégnation des fils de verre par le polyéthylène révélée par une couleur blanchâtre localisée, ainsi que des décohésions microscopiques;

- le fait de ne pas utiliser de préchauffage du ruban implique non pas un masque d'imprégnation mais des décohésions microscopiques localisées dudit matériau ou de celui du tube.

Le tableau 3 ci-dessous illustre une comparaison des pressions d'éclatement entre les différents tuyaux montrés aux figures 3a à 3c et le tuyau conforme à l'invention de la figure 1a.

## TABLEAU 3

|  | Pression d'éclatement (bar) |
|---|---|
| Fig.3a: verre seul | 20 |
| Fig.3b: verre et PE coenroulés non comêlés | 27 |
| Fig.3c: Twintex, ruban non préchauffé | 28 |
| Fig. 1a: Twintex avec ruban préchauffé | 40 |

Il va de soi que de nombreuses modifications peuvent être apportées sans pour autant sortir du cadre de l'invention tel que défini par les revendications.

## Revendications

1. Procédé de fabrication d'un corps de révolution creux (1) dont la paroi est à base d'une matière organique thermoplastique A dans laquelle sont noyés, en étant enroulés hélicoïdalement autour de son axe, des fils de verre continus, selon lequel on réalise, en ligne, les étapes suivantes :

   a/ on enroule, de manière hélicoïdale, un ruban à l'état chauffé autour d'un tube en rotation autour de son axe dont au moins la face externe de la paroi est à base de la matière A, le ruban étant à base de la matière A et de fils de verre continus;
   b/ on chauffe à une température supérieure à la température de fusion de la matière A, une partie de la surface périphérique extérieure du tube revêtue du ruban, dans une zone située immédiatement en aval de la zone de contact entre le ruban et le tube;
   c/ on applique une pression locale sur la partie de la surface périphérique extérieure du tube revêtue du ruban, dans une zone située immédiatement en aval de la zone de chauffe de l'étape b/.

2. Procédé selon la revendication 1, **caractérisé en ce que le ruban** (10) arrive pour l'étape a/ à l'état chauffé en ayant subi, dans une zone située à proximité d'un tube, une opération de chauffage au moins en superficie à une température supérieure à la température de ramollissement de la matière A.

3. Procédé selon la revendication 1 ou 2, **caractérisé en ce que** préalablement à l'étape a/, on réalise, également en ligne, les étapes suivantes :

   - on entraîne et on assemble des fils co-mêlés continus (9) constitués de filaments de verre et de filaments de matière A intimement mélangés sous la forme d'au moins une nappe (91) de fils parallèles;
   - on introduit ladite nappe dans une zone où elle est chauffée à une température comprise entre la température de fusion et la température de dégradation de la matière A ;
   - on fait passer la nappe chauffée dans un dispositif d'imprégnation (743) de manière à obtenir un ruban densifié et laminé de forme plus aplatie que celle du ruban conforme à l'étape a/ ;

- on introduit le ruban laminé dans une zone où il est chauffé à une température comprise entre la température de fusion et la température de dégradation de la matière A de manière à obtenir le ruban chauffé conforme à l'étape a/.

4. Corps de révolution creux tel qu'obtenu par le procédé selon l'une quelconque des revendications 1 à 3, destiné notamment à contenir un fluide sous pression, la paroi du corps (1) comprenant selon son épaisseur:

- une première zone (a) dont la périphérie interne est destinée à être en contact avec le fluide et dont au moins la périphérie externe est constituée par une matière organique thermoplastique A unique,
- et une deuxième zone constituée d'une matière thermoplastique identique à la matière A et de fils de verre continus noyés dans ladite matière thermoplastique et enroulés hélicoïdalement autour de l'axe longitudinal du corps de révolution creux,

   **caractérisé en ce que,**

- la deuxième zone comprend selon son épaisseur une première partie (b) agencée dans la continuité de la première zone (a) du corps (1) et constituée par la matière thermoplastique A et les fils de verre, et une seconde partie (c) formant la périphérie externe du corps (1) et constituée par la seule matière thermoplastique A, et
- la paroi dudit corps (1) présente un taux volumique de vide $V_v$ inférieur à 0,5 %, de préférence inférieur à 0,2 %.

5. Corps de révolution selon la revendication 4, **caractérisé en ce que** la matière organique thermoplastique A est une polyoléfine ou du chlorure de polyvinyle.

6. Corps de révolution selon la revendication 5, **caractérisé en ce que** la polyoléfine est du polyéthylène PE.

7. Corps de révolution selon l'une des revendications 4 à 6, **caractérisé en ce que** la densité d de la matière organique thermoplastique A est variable dans l'épaisseur de la paroi.

8. Corps de révolution selon Tune des revendications 4 à 7, **caractérisé en ce que** la densité d de la matière organique thermoplastique A est comprise entre 0,915 et 0,960 g/cm$^3$.

9. Corps de révolution selon l'une des revendications 4 à 8, **caractérisé en ce que** les fils de verre continus forment un angle compris entre 50 et 55° avec l'axe dudit corps.

10. Corps de révolution selon Tune des revendications 4 à 7, **caractérisé en ce que** les fils de verre continus noyés dans la matière organique thermoplastique forment un angle proche de 90° avec l'axe longitudinal du corps et que d'autres fils de verre continus sont noyés dans la matière organique thermoplastique en étant disposés longitudinalement le long de l'axe du corps.

11. Corps de révolution selon la revendication 4, **caractérisé en ce que** les fils de verre continus sont répartis uniformément dans la première partie (b) de la deuxième zone de la paroi du corps creux.

12. Tuyau composite constitué du corps de révolution selon l'une quelconque des revendications 4 à 11 revêtu d'une couche exteme de finition et de protection en matière organique thermoplastique, de préférence identique à celle du corps de révolution.

13. Dispositif (2) de mise en oeuvre du procédé selon l'une des revendications 1 à 3, comprenant:

- des moyens pour chauffer (74) au moins en superficie un ruban (10) constitué de fils de verre continus noyés dans une matière organique thermoplastique A, dans une zone située à proximité d'un tube (5) dont la paroi est à base de la même matière A, en rotation autour de son axe ;
- des moyens (71) pour enrouler, de manière hélicoïdale, le ruban chauffé autour du tube en rotation ;
- des moyens pour chauffer (73) à une température supérieure à la température de fusion de la matière A, une partie de la surface périphérique extérieure du tube revêtue du ruban, dans une zone située immédiatement en aval de la zone de contact entre le ruban et le tube;
- des moyens pour appliquer une pression (72) locale sur la partie de la surface périphérique extérieure du tube revêtue du ruban, dans une zone située immédiatement en aval de la zone de chauffe.

14. Dispositif selon la revendication 13, **caractérisé en ce que** les moyens de chauffage superficiel du ruban (74) comprennent au moins un four (741) de type à infrarouge, de préférence fonctionnant avec des rubans ou lampes (742) régulés en puissance.

15. Dispositif selon la revendication 13 ou 14, **caractérisé en ce que** les moyen d'enroulement comprennent une tête de pose (71).

16. Dispositif selon la revendication 15, **caractérisé en ce que** la tête de pose (71) est mobile et commandée en rotation, et comprend notamment trois galets (714) de forme hyperboloïde, parallèles entre eux et dont l'axe longitudinal est sensiblement perpendiculaire à l'axe de rotation de la tête.

17. Dispositif selon l'une des revendications 13 à 16, **caractérisé en ce que** les moyens de chauffage du tube revêtu du ruban comprennent une buse de soufflage d'air chaud (73) de section approximativement oblongue.

18. Dispositif selon Tune des revendications 13 à 17, **caractérisé en ce que** les moyens pour appliquer la pression localisée comprennent au moins un galet rotatif (72) mis en pression par un vérin.

19. Dispositif selon l'une des revendications 13 à 18, **caractérisé en ce qu'**il comporte en outre :

   - des moyens (8) pour entraîner et assembler des fils co-mêlés continus (9) constitués de filaments de verre et de filaments de matière A intimement mélangés sous la forme d'au moins une nappe (91) de fils parallèles;
   - des moyens (741) pour chauffer ladite nappe à une température comprise entre la température de fusion et la température de dégradation de la matière A ;
   - un dispositif d'imprégnation (743) de la nappe chauffée de manière à obtenir un ruban densifié et laminé de forme aplatie ;
   - des moyens (741) pour maintenir le ruban à une température comprise entre la température de fusion et la température de dégradation de la matière A jusqu'aux moyens d'enroulement dudit ruban.

20. Dispositif selon la revendication 19, **caractérisé en ce que** les moyens d'enroulement et d'assemblage comprennent un cantre (8) à partir duquel sont déroulées des bobines de fils co-mêlés continus (9) constitués de filaments de verre et de filaments de matière A intimement mélangés et au moins un galet (753) assurant le guidage des fils co-mêlés.

21. Dispositif selon la revendication 19 ou 20, **caractérisé en ce que** les moyens de chauffage de la nappe comprennent au moins un four à infrarouges.

22. Dispositif selon l'une des revendications 19 à 21, **caractérisé en ce que le** dispositif d'imprégnation (743) est constitué de trois cylindres chauffants (744) parallèles entre eux et disposés en triangle.

23. Dispositif selon l'une des revendications 19 à 22, **caractérisé en ce que** les moyens de chauffage du ruban comprennent au moins un four à infrarouges (741).

**Patentansprüche**

1. Verfahren zur Herstellung eines rotationssymmetrischen Hohlkörpers (1), dessen Wand auf der Basis eines thermoplastischen organischen Materials A ist, in welches endlose Glasfäden eingebettet sind, indem sie schraubenförmig um seine Achse gewickelt sind, gemäß welchem in einer Produktionslinie die Stufen:

   a) schraubenförmiges Wickeln eines erwärmten Bandes um ein sich um seine Achse drehendes Rohr, wobei mindestens die Außenseite der Wand auf der Basis des Materials A und das Band auf der Basis des Materials A und von endlosen Glasfäden ist,

   b) Erhitzen eines Teils der Außenfläche des mit dem Band beschichteten Rohrs in einer Zone, die sich unmittelbar nach der Zone des Kontakts des Bandes mit dem Rohr befindet, auf eine Temperatur, die höher als die Schmelztemperatur des Materials A ist, und

c) Ausüben eines lokalisierten Drucks auf den Teil der Außenfläche des mit dem Band beschichteten Rohrs in einer Zone, die sich unmittelbar an die Erwärmungszone von Stufe b) anschließt,

durchgeführt werden.

2. Verfahren nach Anspruch 1, **dadurch gekennzeichnet, dass** das Band (10) in Stufe a) erhitzt ankommt, da es in einer sich in der Nähe eines Rohrs befindenden Zone wenigstens an der Oberfläche auf eine Temperatur erhitzt worden ist, die höher als die Erweichungstemperatur des Materials A ist.

3. Verfahren nach Anspruch 1 oder 2, **dadurch gekennzeichnet, dass** ebenfalls in der Produktionslinie vor der Stufe a) die Stufen:

- Vorwärtsbewegen und Verbinden der co-ersponnenen Endlosfäden (9), die aus innig miteinander vermengten Glasfilamenten und Filamenten aus dem Material A bestehen, zu mindestens einer Bahn (91) aus parallelen Fäden,

- Schicken dieser Bahn in eine Zone, worin sie auf eine Temperatur von zwischen Schmelztemperatur und Zersetzungstemperatur des Materials A erhitzt wird,

- Laufenlassen der erwärmten Bahn durch eine Imprägniereinrichtung (743) derart, dass ein verdichtetes, gewalztes Band erhalten wird, dessen Form flacher als diejenige des entsprechend Stufe a) geformten Bandes ist, und

- Schicken des gewalzten Bandes in eine Zone, worin es auf eine Temperatur von zwischen Schmelztemperatur und Zersetzungstemperatur des Materials A derart erhitzt wird, dass das Band entsprechend Stufe a) erhalten wird,

durchgeführt werden.

4. Rotationssymmetrischer Hohlkörper, der gemäß dem Verfahren nach einem der Ansprüche 1 bis 3 hergestellt und insbesondere vorgesehen ist, ein unter Druck stehendes Fluid aufzunehmen, wobei die Wand des Körpers (1) entlang der Dicke

- einen ersten Bereich (a), dessen innere Fläche vorgesehen ist, mit dem Fluid in Berührung zu kommen, und wenigstens dessen äußere Fläche aus einem einzigen thermoplastischen organischen Material A besteht, und

- einen zweiten Bereich, der aus einem thermoplastischen Material, das gleich dem Material A ist, und endlosen Glasfäden besteht, die in das thermoplastische Material eingebettet und schraubenförmig um die Längsachse des rotationssymmetrischen Hohlkörpers gewickelt sind, umfasst, **dadurch gekennzeichnet, dass**

- der zweite Bereich entlang der Dicke einen ersten Teil (b), der in der Kontinuität des ersten Bereichs (a) des Hohlkörpers (1) angeordnet ist und aus dem thermoplastischen Material A und den Glasfäden besteht, und einen zweiten Teil (c), der die Außenfläche des Hohlkörpers (1) bildet und ausschließlich aus dem thermoplastischen Material A besteht, umfasst, und

- die Wand des Hohlkörpers (1) einen Volumenanteil $V_v$ an Hohlräumen von weniger als 0,5 % und vorzugsweise von weniger als 0,2 % aufweist.

5. Rotationssymmetrischer Körper nach Anspruch 4, **dadurch gekennzeichnet, dass** das thermoplastische organische Material A ein Polyolefin oder Polyvinylchlorid ist.

6. Rotationssymmetrischer Körper nach Anspruch 5, **dadurch gekennzeichnet, dass** das Polyolefin Polyethylen, PE, ist.

7. Rotationssymmetrischer Körper nach einem der Ansprüche 4 bis 6, **dadurch gekennzeichnet, dass** die Dichte d des thermoplastischen organischen Materials A in der Wanddicke veränderlich ist.

8. Rotationssymmetrischer Körper nach einem der Ansprüche 4 bis 7, **dadurch gekennzeichnet, dass** die Dichte d des thermoplastischen organischen Materials A 0,915 bis 0,960 g/cm$^3$ beträgt.

9. Rotationssymmetrischer Körper nach einem der Ansprüche 4 bis 8, **dadurch gekennzeichnet, dass** die endlosen Glasfäden mit der Achse dieses Körpers einen Winkel von 50 bis 55° bilden.

10. Rotationssymmetrischer Körper nach einem der Ansprüche 4 bis 7, **dadurch gekennzeichnet, dass** die in das thermoplastische organische Material eingebetteten endlosen Glasfäden einen Winkel von etwa 90° mit der Längsachse dieses Körpers bilden und andere endlose Glasfäden in das thermoplastische organische Material eingebettet sind, indem sie entlang der Achse dieses Körpers längs angeordnet sind.

11. Rotationssymmetrischer Körper nach Anspruch 4, **dadurch gekennzeichnet, dass** die endlosen Glasfäden im ersten Teil (b) des zweiten Wandbereichs des Hohlkörpers gleichmäßig verteilt sind.

12. Kompositschlauch, der aus dem rotationsymmetrischen Körper nach einem der Ansprüche 4 bis 11 besteht und mit einer schützenden und abschließenden Außenschicht aus einem thermoplastischen organischen Material überzogen ist, das vorzugsweise gleich dem des rotationssymmetrischen Körpers ist.

13. Vorrichtung (2) zur Durchführung des Verfahrens nach einem der Ansprüche 1 bis 3, die

- Mittel (74) zum wenigstens oberflächlichen Erhitzen eines Bandes (10), das aus in ein thermoplastisches organisches Material A eingebetteten endlosen Glasfäden besteht, in einer Zone, die sich in der Nähe eines um seine Achse rotierenden Rohrs (5) befindet, dessen Wand auf der Basis desselben Materials A ist, ,

- Mittel (71) zum schraubenförmigen Wickeln des erhitzten Bandes um das rotierende Rohr,

- Mittel (73) zum Erhitzen eines Teils der Außenfläche des mit dem Band beschichteten Rohrs auf eine Temperatur oberhalb der Schmelztemperatur des Materials A in einer Zone, die sich unmittelbar nach der Zone des Kontakts des Bandes mit dem Rohr befindet, und

- Mittel (72) zum Ausüben eines lokalisierten Drucks auf den Teil der Außenfläche des mit dem Band beschichteten Rohrs in einer Zone, die sich unmittelbar nach der Erwärmungszone befindet,

umfasst.

14. Vorrichtung nach Anspruch 13, **dadurch gekennzeichnet, dass** die Mittel (74) zum oberflächlichen Erhitzen des Bandes mindestens einen Infrarotofen (741) umfassen, der vorzugsweise mit Strahlerbändern (742) oder Lampen arbeitet, deren Leistung regelbar ist.

15. Vorrichtung nach Anspruch 13 oder 14, **dadurch gekennzeichnet, dass** die Wickelmittel einen Legekopf (71) umfassen.

16. Vorrichtung nach Anspruch 15, **dadurch gekennzeichnet, dass** der Legekopf (71) beweglich und seine Umdrehung gesteuert ist und er insbesondere drei hyperboloide Rollen (714) umfasst, die zueinander parallel stehen und deren Längsachse im Wesentlichen quer zur Rotationsachse des Kopfs verläuft.

17. Vorrichtung nach einem der Ansprüche 13 bis 16, **dadurch gekennzeichnet, dass** die Mittel zum Erhitzen des mit dem Band beschichteten Rohrs eine Heißluftdüse (73) mit näherungsweise länglichem Querschnitt umfassen.

18. Vorrichtung nach einem der Ansprüche 13 bis 17, **dadurch gekennzeichnet, dass** die Mittel zum Ausüben des lokalisierten Drucks mindestens eine sich drehende Rolle (72) umfassen, die von einem Zylinder angedrückt wird.

19. Vorrichtung nach einem der Ansprüche 13 bis 18, **dadurch gekennzeichnet, dass** sie außerdem

- Mittel (8) zum Vorwärtsbewegen und Verbinden der co-ersponnenen Endlosfäden (9), die aus innig miteinander vermengten Glasfilamenten und Filamenten aus dem Material A bestehen, zu mindestens einer Bahn (91) aus parallelen Fäden,

- Mittel (741) zum Erhitzen dieser Bahn auf eine Temperatur von zwischen Schmelztemperatur und Zersetzungstemperatur des Materials A,

- eine Einrichtung (743) zum Imprägnieren der erwärmten Bahn derart, dass ein verdichtetes, gewalztes Band mit flacher Form erhalten wird, und

- Mittel (741), um das Band auf einer Temperatur von zwischen Schmelztemperatur und Zersetzungstemperatur des Materials A bis zu den Mitteln für das Aufwickeln dieses Bandes zu halten,

umfasst.

20. Vorrichtung nach Anspruch 19, **dadurch gekennzeichnet, dass** die Mittel zum Aufwickeln und Verbinden ein Spulengatter (8), ab welchem Spulen aus co-ersponnenen Endlosfäden (9) abgewickelt werden, die aus innig miteinander vermengten Glasfilamenten und Filamenten aus dem Material A bestehen, und mindestens eine Rolle (753), welche die Führung der co-ersponnenen Fäden sicherstellt, umfassen.

21. Vorrichtung nach Anspruch 19 oder 20, **dadurch gekennzeichnet, dass** die Mittel zum Erhitzen der Bahn mindestens einen Infrarotofen umfassen.

22. Vorrichtung nach einem der Ansprüche 19 bis 21, **dadurch gekennzeichnet, dass** die Imprägniereinrichtung (743) aus drei beheizten Zylindern (744) besteht, die parallel zueinander in den Ecken eines Dreiecks angeordnet sind.

23. Vorrichtung nach einem der Ansprüche 19 bis 22, **dadurch gekennzeichnet, dass** die Mittel zum Erhitzen des Bandes mindestens einen Infrarotofen (741) umfassen.

## Claims

1. Process for producing a hollow rotational body (1) whose wall is based on an organic thermoplastics substance A, in which continuous glass threads are embedded, by being wrapped helicoidally about the axis thereof, according to which the following stages are carried out in succession:

    a) a strip in the heated state is wrapped in a helicoidal manner around a tube which rotates about its axis, and at least the external face of the wall of which is based on substance A, the strip being based on substance A and continuous glass threads;
    b) a portion of the external peripheral surface of the tube, which portion is coated with the strip, is heated to a temperature higher than the melting temperature of substance A in a zone located immediately downstream of the zone of contact between the strip and the tube;
    c) local pressure is applied to the portion of the external peripheral surface of the tube, which portion is coated with the strip, in a zone located immediately downstream of the heating zone in stage b).

2. Process according to claim 1, **characterised in that** the strip (10) is supplied to stage a) in the heated state having undergone, in a zone located near a tube, a heating operation at least at the surface to a temperature higher than the softening temperature of substance A.

3. Process according to claim 1 or 2, **characterised in that**, before stage a), the following stages are also carried out in succession:

    - continuous intermingled threads (9), which are composed of glass filaments and filaments of substance A intimately mixed, are drawn and assembled in the form of at least one sheet (91) of parallel threads;
    - the sheet is introduced into a zone where it is heated to a temperature of between the melting temperature and the degradation temperature of substance A;
    - the heated sheet is moved into an impregnation device (743) in order to obtain a densified and laminated strip of a more flattened shape than the strip according to stage a);
    - the laminated strip is introduced into a zone where it is heated to a temperature of between the melting temperature and the degradation temperature of substance A in order to obtain the heated strip according to stage a).

4. Hollow rotational body as obtained by the process according to any one of claims 1 to 3, intended in particular to contain a pressurised fluid, the wall of the body (1) comprising according to the thickness thereof:

- a first zone (a) whose internal periphery is intended to be in contact with the fluid and of which at least the external periphery is composed of a single organic thermoplastics substance A,
- and a second zone which is composed of a thermoplastics substance which is identical to substance A and continuous glass threads which are embedded in the thermoplastics substance and which are wrapped helicoidally about the longitudinal axis of the hollow rotational body, **characterised in that**
- the second zone comprises, according to its thickness, a first portion (b) which is arranged in continuation of the first zone (a) of the body (1) and which is composed of thermoplastics substance A and the glass threads, and a second portion (c) which forms the external periphery of the body (1) and which is composed of the single thermoplastics substance A, and
- the wall of the body (1) has a volumetric vacuum rate $V_v$ of less than 0.5%, preferably less than 0.2%.

5. Rotational body according to claim 4, **characterised in that** organic thermoplastics substance A is a polyolefin or polyvinyl chloride.

6. Rotational body according to claim 5, **characterised in that** the polyolefin is polyethylene PE.

7. Rotational body according to any one of claims 4 to 6, **characterised in that** the density d of organic thermoplastics substance A is variable within the thickness of the wall.

8. Rotational body according to any one of claims 4 to 7, **characterised in that** the density d of organic thermoplastics substance A is between 0.915 and 0.960 g/cm$^3$.

9. Rotational body according to any one of claims 4 to 8, **characterised in that** the continuous glass threads form an angle of between 50 and 55° with the axis of the body.

10. Rotational body according to any one of claims 4 to 7, **characterised in that** the continuous glass threads which are embedded in the organic thermoplastics substance form an angle close to 90° with the longitudinal axis of the body, and **in that** other continuous glass threads are embedded in the organic thermoplastics substance and are arranged longitudinally along the axis of the body.

11. Rotational body according to claim 4, **characterised in that** the continuous glass threads are distributed uniformly in the first portion (b) of the second zone of the wall of the hollow body.

12. Composite tube composed of the rotational body according to any one of claims 4 to 11, coated with an external finishing and protective coating of an organic thermoplastics substance, preferably identical to that of the rotational body.

13. Device (2) for carrying out the process according to any one of claims 1 to 3, comprising:

- means for heating (74), at least at the surface, a strip (10) which is composed of continuous glass threads which are embedded in an organic thermoplastics substance A, in a zone located near a tube (5) whose wall is based on the same substance A and which rotates about the axis thereof;
- means (71) for winding, in a helicoidal manner, the heated strip about the rotating tube;
- means for heating (73), to a temperature higher than the melting temperature of substance A, a portion of the external peripheral surface of the tube, which portion is coated with the strip, in a zone located immediately downstream of the zone of contact between the strip and the tube;
- means for applying local pressure (72) to the portion of the external peripheral surface of the tube, which portion is coated with the strip, in a zone located immediately downstream of the heating zone.

14. Device according to claim 13, **characterised in that** the means for heating the surface of the strip (74) comprise at least one infrared-type furnace (741), which preferably operates with strips or lamps (742) which are regulated in terms of power.

15. Device according to claim 13 or 14, **characterised in that** the winding means comprise a positioning head (71).

**16.** Device according to claim 15, **characterised in that** the positioning head (71) is movable and controlled in rotation, and comprises in particular three hyperboloid rollers (714) which are parallel with each other and whose longitudinal axis is substantially perpendicular to the axis of rotation of the head.

**17.** Device according to any one of claims 13 to 16, **characterised in that** the means for heating the tube which is coated with the strip comprise a nozzle, which is approximately oblong in cross-section, for blowing hot air (73).

**18.** Device according to any one of claims 13 to 17, **characterised in that** the means for applying localised pressure comprise at least one rotatable roller (72) which is pressurised by an actuator.

**19.** Device according to any one of claims 13 to 18, **characterised in that** it further comprises:

- means (8) for drawing and assembling continuous intermingled threads (9) which are composed of glass filaments and filaments of substance A which are intimately mixed in the form of at least one sheet (91) of parallel threads;
- means (741) for heating the sheet to a temperature of between the melting temperature and the degradation temperature of substance A;
- a device (743) for impregnating the heated sheet in order to obtain a densified and laminated flattened strip;
- means (741) for maintaining the strip at a temperature of between the melting temperature and the degradation temperature of substance A up to the means for winding the strip.

**20.** Device according to claim 19, **characterised in that** the winding and assembly means comprise a creel (8), from which coils of continuous intermingled threads (9), which are composed of filaments of glass and filaments of substance A intimately mixed, are unwound, and at least one roller (753) which ensures the guiding of the intermingled threads.

**21.** Device according to claim 19 or 20, **characterised in that** the means for heating the sheet comprise at least one infrared furnace.

**22.** Device according to any one of claims 19 to 21, **characterised in that** the impregnating device (743) is composed of three heating cylinders (744) which are parallel with each other and arranged in the form of a triangle.

**23.** Device according to any one of claims 19 to 22, **characterised in that** the means for heating the strip comprise at least one infrared furnace (741).

<u>Fig.1a</u>

EP 1 123 194 B1

## Fig.1b

## Fig.1c

18

FIG.2A

EP 1 123 194 B1

FIG.2B

742

744

742

10

743

741

74

741

FIG.2C

FIG.2D

FIG.2E

Fig.3a

Fig.3b

**Fig.3c**